# EUROPEAN PATENT SPECIFICATION

(11) **EP 3 206 872 B1**
(45) Date of publication and mention of the grant of the patent: **09.01.2019**
(21) Application number: 14904186.5
(22) Date of filing: 15.10.2014
(51) Int. Cl.: B32B 27/38, B32B 27/08, C09D 163/10, C09D 5/00

(54) **ANTI-FOG COATINGS AND METHODS**
ANTIBESCHLAGBESCHICHTUNGEN UND VERFAHREN
REVÊTEMENTS ANTIBUÉE ET PROCÉDÉS ASSOCIÉS

(43) Date of publication of application: 23.08.2017
(73) Proprietor: Honeywell International Inc., Morris Plains, NJ 07950 (US)
(72) Inventor: WANG, Marilyn, Morristown, New Jersey 07962-2245 (US); GU, Alex, Morristown, New Jersey 07962-2245 (US); YOU, Xiaorong, Morristown, New Jersey 07962-2245 (US); NEBO, Jon, Morristown, New Jersey 07962-2245 (US); LIU, Anna, Morristown, New Jersey 07962-2245 (US); OLMSTEAD, Brian Keith, Morristown, New Jersey 07962-2245 (US)
(74) Representative: Houghton, Mark Phillip
(86) International application number: PCT/CN2014/088634
(87) International publication number: WO 2016/058142

(56) References cited:
- WO-A1-2013/089927
- US-A1- 2007 275 171
- US-A1- 2012 040 190
- US-A1- 2012 177 928

## Description

### TECHNICAL FIELD

The present subject matter relates generally to anti-fog coating compositions, such as transparent polymeric materials, methods for forming coated transparent polymeric materials, and coated transparent polymeric materials.More particularly the present application relates to epoxy-acrylate hybrid coating compositions that impartlong-lasting anti-fog performance for transparent polymeric materials, methods for forming coated transparent polymeric materials using such coating compositions, and coated transparent polymeric materials with long-lasting anti-fog performance.

### BACKGROUND

Transparent polymeric materials are used for a variety of products through whichlight is transmitted for viewing an image. The transparent polymeric material typicallyhas a first surface and a second surface. One surface can be curved relative to the other to change the direction of light to the eye, such as in an ophthalmic lens of eyeglasses, or alternatively, the surfaces can be parallel, such as in a television screen or a face shield ofa protective helmet. Common lens forming materials include CR-39 (diethyleneglycolbisallyl carbonate), bisphenol A polycarbonate (PC), and poly(methylmethacrylate)(PMMA). These lens forming materials are lighter and more shatter resistant than traditional glass and offer excellent transparency and low haze. Despite the above notedbenefits, some serious drawbacks to transparent polymeric materials include theirsusceptibility to fogging, scratching, or abrasion.

Transparent polymeric materials become fogged when tiny water dropletscondense on the surface and cause light to scatter, rendering the surface translucent. Fogging typically occurs when a cold surface suddenly comes in contact with warm, moistair. In some cases, fogging can be a dangerous condition, for example, when the fogged material is an ophthalmic lens affecting a user's vision. Additionally, transparent polymeric materials are much softer than glass and can be easily scratched under normalactions such as cleaning, wiping off dust, and normal handling while in use. Over time, scratches and abrasions on the surface can also obscure the user's vision.

Consequently, such transparent polymeric surfaces are often treated with one ormore coatings to provide anti-fog performance, and scratch or abrasion resistance. Lens coatings can be applied in different ways, such as, for example, using a dip coating process or a spin coating process. Multiple coatings may also be necessary to obtain other properties such as a mirror coating, and stain and smudge resistance.

In this regard, much research has been devoted to providing coatings for transparent polymeric materials to improve their anti-fog performance, and scratch orabrasion resistance. State of the art anti-fog (AF) technologies typically include twoapproaches to maintain surface transparency after moisture condensation. One approach isto treat a surface by applying a completely hydrophilic coating to absorb all of the watermolecules in the coating's interior; or alternatively, another approach is to embedhydrophilic surfactants within an otherwise hydrophobic coating to reduce the watercontact angle and to spread condensed moisture from scattered and scattering droplets intoa flat film (sheeting), thereby minimizing the transmission loss. Each of these approacheshas its own limitations and shortcomings.

Most anti-fog coatings on the market include incorporating mobile surfactantsinto a coating matrix. When moisture condensation occurs, the surfactants will eithermigrate to or orient towards the top surface to reduce the water-solid interfacial tension and the contact angle. As the surfactants are not chemically bonded to the coatingstructure, the surfactants will be washed off the surface either by repeated use or cleaning,leading to a fade-away AF effect. Therefore, they are suitable for providing only atemporary, i.e., not durable, AF effect. As such, research has been conducted to put epoxy in AF coatings to reduce the diffusion speed and rate of surfactant from to coating. However, the introduction of epoxy into the AF coating mitigates the AF performance, as well as the coating curing behavior and cross-linking degree. In addition, the surface is prone to damage and staining. Moreover, the plasticizing effect of the surfactant on the coating surface oftenmakes the coating more vulnerable to abrasion and contamination.

Chemistries and coating processes for these coatings range from thermally curedcoatings to ultraviolet (UV) cured coatings. Unfortunately, many of these conventionalcoatings have several drawbacks. For example, current anti-fog coatings are generally notlong-lasting and often lose effectiveness after only a few lens cleanings. Moreover, manyof these coatings require the use of a solvent or a primer that is undesirably high in volatile organic compound (VOC) content. Furthermore, while thermally cured coatings may provide good scratch resistance, they also require long cure times and high energy consumption for solvent evaporation. Additionally, while UV cured coatings provide fast cure, energy savings, and high through put production, their scratch resistance is generally poorer than with thermally cured coatings.

### SUMMARY

An anti-fog coating can include a cationically polymerizable compound, a radically polymerizable compound, a non-ionic surfactant, and an ionic surfactant. In an example, the cationically polymerizable compound includes at least one epoxy group. Further, the radically polymerizable compound can include at least one acrylate group.

A method for forming an anti-fog coated surface includes preparing an anti-fog coating. The anti-fog coating can include a cationically polymerizable compound, a radically polymerizable compound, a non-ionic surfactant, and an ionic surfactant. In an example, the cationically polymerizable compound includes at least one epoxy group. Further, the radically polymerizable compound can include at least one acrylate group. The cationically polymerizable compound and the radically polymerizable compound are polymerized to form the coated surface. In an example the method can include washing the coated surface, including contacting the anti-fog coated surface with water and drying the anti-fog coated surface.

### DETAILED DESCRIPTION

The following Detailed Description is merely exemplary in nature and is notintended to limit the subject matter or the application and uses of the same. Furthermore,there is no intention to be bound by any theory presented in the preceding background or the following detailed description.

In an embodiment, an improved coating system for transparent polymeric materials, such as ophthalmic lenses, provides improved characteristics in the form of anti-fog performance and scratch or abrasion resistance, while also providing improved manufacturability and rapid curing as compared to prior art coating systems. Generally, the coating system described herein is a composite coating that hybridizes both epoxy and acrylate coating materials into a single coating system that canhave a reduced surfactant diffusion rate, as compared to previous approaches. In this manner, the coating system exhibits the mechanical properties imparted by epoxies creating a highly abrasion resistant coatingwhile also including the advantageous properties of radiation cured coatings imparted by acrylates in the form of rapid processing and curing as well as a superior vehicle for retaining surfactants.

Embodiments herein provide coating compositions that impart long-lasting anti-fog performance for transparent polymeric materials, methods for forming coated transparent polymeric materials using such coating compositions, and coated transparent polymeric materials with long-lasting anti-fog performance. Moreover, coating compositions described herein can impart improved properties such as scratch and/or abrasion resistance, rapid curing, and/or relatively low solvent/VOC content,methods for forming coated transparent polymeric materials using such coating compositions, and coated transparent polymeric materials that include such coating compositions. Furthermore, other features and characteristics of the presentsubject matter will become apparent from the subsequent detailed description and the appendedclaims, taken in conjunction with this background.

Various optical terms are used to describe the transparent polymeric material, e.g., lens, ophthalmic lens, optical filter, and the like. Tofacilitate the understanding of the detailed description, some terms are initially defined as follows:
Lens: an ophthalmic lens that provides refractive correction or a lens thatprovides no refractive correction also known as a "plano lens".

Visible light spectrum: energy emissions having a wavelength of between approximately 400 nm and 780 nm.

Blocking: a measure of the percentage of light that is either reflected by the surface or surface coatings or absorbed by the dye or plastic of the lens.

In an example, the coating includes a cationically polymerizable compound including at least one epoxy group, a radically polymerizable compound including at least one acrylate group, a non-ionic surfactant, and an ionic surfactant.

In an example, the coating is a suspension that includes organicpolymeric constituents and, optionally, solvents. A polymeric constituent may be a monomer or a polymer in solvent. For example, the coating may include monomers that polymerize upon curing. Alternatively or in addition, the coatingmay include polymer material in a solvent. The particulate filler generally forms adispersed phase within the coating.

The coating may include one or more reaction constituents or polymer constituents for the preparation of a polymer. A polymer constituent may include monomeric molecules, polymeric molecules or a combination thereof. The coatingmay further comprise components selected from the group consisting of solvents, plasticizers, chain transfer agents, catalysts, stabilizers, surfactants, curing agents, reaction mediators and agents for influencing the fluidity of the dispersion.

The polymer constituents can form thermoplastics or thermosets. By way of example, the polymer constituents may include monomers and resins for the formation ofpolyurethane, polyurea, polymerized epoxy, polyester, polyimide, polysiloxanes(silicones), polymerized alkyd, styrene-butadiene rubber, acrylonitrile-butadiene rubber, polybutadiene, or, in general, reactive resins for the production of thermoset polymers. Another example includes an acrylate or a methacrylate polymer constituent. Theprecursor polymer constituents are typically curable organic material (i.e., a polymermonomer or material capable of polymerizing or crosslinking upon exposure to heat or other sources of energy, such as electron beam, ultraviolet light, visible light, etc., or with time upon the addition of a chemical catalyst, moisture, or other agent which cause the polymer to cure or polymerize). A precursor polymer constituent example includes are active constituent for the formation of an amino polymer or an aminoplast polymer, suchas alkylated urea-formaldehyde polymer, melamine-formaldehyde polymer, and alkylatedbenzoguanamine-formaldehyde polymer; acrylate polymer including acrylate and methacrylate polymer, alkyl acrylate, acrylated epoxy, acrylated urethane, acrylatedpolyester, acrylated polyether, vinyl ether, acrylated oil, or acrylated silicone; alkydpolymer such as urethane alkyd polymer; polyester polymer; reactive urethane polymer;phenolic polymer such as resole and novolac polymer; phenolic/latex polymer; epoxypolymer such as bisphenol epoxy polymer; isocyanate; isocyanurate; polysiloxanepolymer including alkylalkoxysilane polymer; or reactive vinyl polymer. The coating of the coating formulation may include a monomer, an oligomer, a polymer, or acombination thereof. In a particular embodiment, the coating of the coatingformulation includes monomers of at least two types of polymers that when cured maycrosslink. For example, the coating may include epoxy constituents and acrylicconstituents that when cured form an epoxy/acrylic polymer.

In an embodiment, the polymer reaction components include an ionically and cationically polymerizable precursors. For example, the coating may include at least one cationically curable component, e.g., at least one cyclic ethercomponent, cyclic lactone component, cyclic acetal component, cyclic thioethercomponent, spiroorthoester component, epoxy-functional component, or oxetane-functionalcomponent. Typically, the coating includes at least one component selected from the group consisting of epoxy-functional components and oxetane-functional components. The coating may include, relative to the total weight of the composite coating formulation, at least about10 wt.% of cationically curable components,for example, at least about 20 wt. %, typically at least about 40 wt. %, or at least about 50wt. %. Generally, the coating includes, relative to the total weight of the composite coating formulation, not greater than about 95 wt. %of cationically curable components, for example, not greater than about 90 wt. %, not greater than about 80 wt. %, or not greater than about 70 wt. %.

In an optional embodiment, the coating may include at least one epoxy-functionalcomponent, e.g., an aromatic-epoxy-functional component ("aromatic epoxy ormore preferably an aliphatic epoxy-functional component ("aliphatic epoxy"). Epoxy-functional components are components comprising one or more epoxy groups, i.e., one or more three-member ring structures (oxiranes).

Aromatic epoxy components include one or more epoxy groups and one or morearomatic rings. The coating may include one or more aromatic epoxy components. An example of an aromatic epoxy component includes an aromatic epoxy derived from apolyphenol, e.g., from bisphenols, such as bisphenol A (4,4'-isopropylidenediphenol),bisphenol F (bis[4-hydroxyphenyl]methane), bisphenol S (4,4'- sulfonyldiphenol), 4,4'-cyclohexylidenebisphenol,4,4'-biphenol, or 4,4'-(9-fluorenylidene)diphenol. Thebisphenol may be alkoxylated (e.g., ethoxylated or propoxylated) or halogenated (e.g.,brominated). Examples of bisphenol epoxies include bisphenoldiglycidyl ethers, such as diglycidyl ether of Bisphenol A or Bisphenol F.

A further example of an aromatic epoxy includes triphenylolmethanetriglycidylether, 1,1, 1-tris(p-hydroxyphenyl)ethane triglycidyl ether, or an aromatic epoxy derivedfrom a monophenol, e.g., from resorcinol (for example, resorcindiglycidyl ether) or hydroquinone (for example, hydroquinone diglycidyl ether). Another example isnonylphenylglycidyl ether.

In addition, an example of an aromatic epoxy includes epoxy novolac, for example, phenol epoxy novolac and cresol epoxy novolac. A commercial example of acresol epoxy novolac includes, for example, EPICLON N-660, N-665, N-667, N-670, N-673, N-680, N-690, orN-695, manufactured by Dainippon Ink and Chemicals, Inc. Anexample of a phenol epoxy novolac includes, for example, EPICLON N-740, N-770, N-775, or N-865, manufactured by Dainippon Ink and Chemicals Inc.

In one embodiment, the coating may contain, relative to the total weight of the composite coating formulation, at least 10 wt.% of one or more aromatic epoxies.

Aliphatic epoxy components have one or more epoxy groups and are free of aromatic rings. The coating may include one or more aliphatic epoxies. An example of an aliphatic epoxy includes glycidyl ether of C2-C30 alkyl; 1,2 epoxy of C3-C30 alkyl; mono or multi glycidyl ether of an aliphatic alcohol or polyol such as 1,4-butanediol, neopentyl glycol, cyclohexane dimethanol, dibromoneopentyl glycol,trimethylol propane, polytetramethylene oxide, polyethylene oxide, polypropylene oxide,glycerol, and alkoxylated aliphatic alcohols; or polyols.

In one embodiment, the aliphatic epoxy includes one or more cycloaliphatic ringstructures. For example, the aliphatic epoxy may have one or more cyclohexene oxidestructures, for example, two cyclohexene oxide structures. An example of an aliphaticepoxy comprising a ring structure includes hydrogenated bisphenol A diglycidyl ether,hydrogenated bisphenol F diglycidyl ether, hydrogenated bisphenol S diglycidyl ether,bis(4-hydroxycyclohexyl)methane diglycidyl ether, 2,2-bis(4-hydroxycyclohexyl)propanediglycidyl ether, 3,4-epoxycyclohexylmethyl-3,4-epoxycyclohexanecarboxylate, 3,4-5epoxy-6-methylcyclohexylmethy 1-3,4-epoxy-6-methylcyclohexanecarboxylate, di(3,4-epoxycyclohexylmethyl)hexanedioate, di(3,4-epoxy-6-methylcyclohexy 1 methyl)hexanedioate, ethylenebis(3,4-epoxycyclohexanecarboxylate), ethanedioldi(3,4-epoxycyclohexylmethyl)ether, or 2-(3,4-epoxycyclohexyl-5,5-spiro-3,4-epoxy)cyclohexane-1,3-dioxane.

In an embodiment, the coating includes, relative to the total weight of the composite coating formulation, at least about 5 wt. % of one or more aliphatic epoxies, for example, at least about 10 wt.% or at least about 20 wt.% of the aliphatic epoxy. Generally, the coating includes, relative to the total weight of the composite coating formulation, not greater than about 70 wt.% of the aliphatic epoxy, for example, not greater than about 50 wt. %, for example not greater than about 40 wt. %.

Typically, the coating includes one or more mono or poly glycidy lethers of aliphatic alcohols, aliphatic polyols, polyesterpolyols or polyetherpolyols. An example of such a component includes 1,4-butanedioldiglycidylether, glycidylether ofpolyoxyethylene or polyoxypropylene glycol or triol of molecular weight from about 200to about 10,000; glycidylether of polytetramethylene glycol orpoly(oxyethyleneoxybutylene)random or block copolymers. An example of commercially availableglycidylether includes a polyfunctionalglycidylether, such as Heloxy 48, Heloxy 67,Heloxy 68, Heloxy 107, and Grilonit F713; or monofunctionalglycidylethers, such asHeloxy 71, Heloxy 505, Heloxy 7, Heloxy 8, and Heloxy 61 (sold by ResolutionPerformances, www.resins.com).

The coating may contain about 3 wt.% to about 40 wt. %, more typicallyabout 5 wt. %to about 20 wt. % of mono or poly glycidyl ethers of an aliphatic alcohol,aliphatic polyol, polyesterpolyol or polyetherpolyol.

The coating may include one or more oxetane-functional components("oxetanes"). Oxetanes are components having one or more oxetane groups, i.e., one or more four-member ring structures including one oxygen and three carbon members.

In addition to or instead of one or more cationically curable components, the coating may include one or more free radical curable components, e.g., one or more free radical polymerizable components having one or more ethylenically unsaturatedgroups, such as (meth)acrylate (i.e., acrylate or methacrylate) functional components.

An example of a monofunctionalethylenically unsaturated component includesacrylamide, N,N-dimethylacrylamide, (meth)acryloylmorpholine, 7-amino-3,7-dimethyloctyl(meth)acrylate, isobutoxymethyl(meth)acrylamide, isobornyloxyethyl (meth)acrylate, isobornyl(meth)acrylate, 2-ethylhexyl(meth)acrylate, ethyldiethyleneglycol (meth)acrylate, t-octyl(meth)acrylamide, diacetone (meth)acrylamide, dimethylaminoethyl(meth)acrylate, diethylaminoethyl(meth)acrylate, lauryl (meth)acrylate, dicyclopentadiene (meth)acrylate, dicyclopentenyloxyethyl(meth)acrylate,dicyclopentenyl(meth)acrylate, N,N-dimethyl(meth) acrylamidetetrachlorophenyl(meth)acrylate, 2-tetrachlorophenoxyethyl (meth)acrylate,tetrahydrofurfuryl(meth)acrylate, tetrabromophenyl(meth)acrylate, 2-tetrabromophenoxyethyl (meth)acrylate, 2-trichlorophenoxyethyl(meth)acrylate,tribromophenyl(meth)acrylate, 2-tribromophenoxyethyl(meth)acrylate, 2-hydroxyethyl(meth)acrylate, 2-hydroxypropyl(meth)acrylate, vinylcaprolactam, N-vinylpyrrolidone,phenoxyethyl(meth)acrylate, butoxyethyl(meth)acrylate, pentachlorophenyl(meth)acrylate, pentabromophenyl(meth)acrylate, polyethylene glycolmono(meth)acrylate, polypropylene glycol mono(meth)acrylate, bornyl(meth)acrylate,methyltriethylenediglycol (meth)acrylate, or a combination thereof.

An examples of the polyfunctionalethylenically unsaturated component includesethylene glycol di(meth)acrylate, dicyclopentenyl di(meth)acrylate, triethylene glycoldiacrylate, tetraethylene glycol di(meth)acrylate, tricyclodecanediyldimethylenedi(meth)acrylate, trimethylolpropane tri(meth)acrylate, ethoxylatedtrimethylolpropanetri(meth)acrylate, propoxylatedtrimethylolpropane tri(meth)acrylate, tripropylene glycoldi(meth)acrylate, neopentyl glycol di(meth)acrylate, both-terminal (meth)acrylic acidadduct ofbisphenol A diglycidyl ether, 1,4-butanediol di(meth)acrylate, 1,6-hexanedioldi(meth)acrylate, polyethylene glycol di(meth)acrylate, (meth)acrylate-functionalpentaerythritol derivatives (e.g., pentaerythritol tri(meth)acrylate, pentaerythritoltetra(meth)acrylate, d ipentaerythritolhexa(meth)acrylate, dipentaerythritolpenta(meth)acrylate, or dipentaerythritol tetra(meth)acrylate), ditrimethylolpropanetetra(meth)acrylate, ethoxylatedbisphenol A di(meth)acrylate, propoxylatedbisphenol Adi(meth)acrylate, ethoxylated hydrogenated bisphenol A di(meth)acrylate, propoxylated-modifiedhydrogenated bisphenol A di(meth)acrylate, ethoxylatedbisphenol Fdi(meth)acrylate, or a combination thereof.

In one embodiment, the coating formulation comprises one or more componentshaving at least 3 (meth)acrylate groups, for example, 3 to 6 (meth)acrylate groups or 5 to 6(meth)acrylate groups.

In particular embodiments, the coating includes, relative to the totalweight of the composite coating formulation, at least about 3 wt. % of one or more freeradical polymerizable components, for example, at least about 5 wt. %, for example atleast about 9 wt. %. Generally, the coating includes not greater than about 50 wt.% of free radical polymerizable components, for example, not greater than about 3 5 wt. %,for example, not greater than about 25 wt. %, for example not greater than about 20 wt. %,for example not greater than about 15 wt. %.

Generally, the polymer reaction constituents or precursors have on average atleast two functional groups, such as on average at least 2.5, for example at least 3.0functional groups. For example, an epoxy precursor may have 2 or more epoxy-functionalgroups. In another example, an acrylic precursor may have two or more methacrylatefunctional groups.

It has been found that a coating including a component having a polyether backbone shows excellent mechanical properties after cure of the compositecoating formulation. An example of a compound having a polyether backbone includes polytetramethylenediol, a glycidylether ofpolytetramethylenediol, an acrylate ofpolytetramethylenediol, a polytetramethylenediol containing one or more polycarbonategroups, or a combination thereof. In an embodiment, the coating includes between5 wt. % and 20 wt. % of a compound having a polyether backbone.

The coating may also include catalysts and initiators. For example, a cationic initiator may catalyze reactions between cationic polymerizable constituents. A radical initiator may activate free-radical polymerization of radiacally polymerizableconstituents. The initiator may be activated by thermal energy or actinic radiation. For example, an initiator may include a cationic photoinitiator that catalyzes cationicpolymerization reactions when exposed to actinic radiation. In another example, the initiator may include a radical photo initiator that initiates free-radical polymerization reactions when exposed to actinic radiation. Actinic radiation includes particulate ornon-particulate radiation and is intended to include electron beam radiation and electromagnetic radiation. In a particular embodiment, electromagnetic radiation includes radiation having at least one wavelength in the range of about 100 nm to about 700 nm and, in particular, wavelengths in the ultraviolet range of the electromagnetic spectrum.

Generally, cationic photo initiators are materials that form active species that, ifexposed to actinic radiation, are capable of at least partially polymerizing epoxides oroxetanes. For example, a cationic photo initiator may, upon exposure to actinic radiation,form cations that can initiate the reactions of cationically polymerizable components, suchas epoxies or oxetanes.

An example of a cationic photoinitiator includes, for example, onium salt with an ions of weak nucleophilicity. An example includes a halonium salt, an iodosyl salt or a sulfonium salt, a sulfoxonium salt, or a diazonium salt. Other examples of cationicphotoinitiators include metallocene salt.

The coating may optionally include photoinitiators useful for photocuring free-radically polyfunctional acrylates. An example of a free radical photo initiator includes benzophenone (e.g., benzophenone, alkyl-substituted benzophenone, or alkoxy-substitutedbenzophenone); benzoin (e.g., benzoin, benzoin ethers, such as benzoin methylether, benzoin ethyl ether, and benzoin isopropyl ether, benzoin phenyl ether, and benzoinacetate); acetophenone, such as acetophenone, 2,2-dimethoxyacetophenone, 4-(phenylthio)acetophenone, and 1,1-dichloroacetophenone; benzilketal, such as benzyl dimethyl ketal, and benzil diethyl ketal; anthraquinone, such as 2-methylanthraquinone, 2-ethylanthraquinone, 2-tertbutylanthraquinone, 1-chloroanthraquinone, and 2-amylanthraquinone; triphenylphosphine; benzoylphosphine oxides, such as, for example, 2,4,6-trimethylbenzoyldiphenylphosphine oxide; thioxanthone or xanthone; acridinederivative; phenazene derivative; quinoxaline derivative; 1-phenyl-1,2-propanedione-2-O-benzoyloxime; 1-aminophenyl ketone or 1-hydroxyphenyl ketone, such as 1-hydroxycyclohexyl phenyl ketone, phenyl(1-hydroxyisopropyl)ketone and 4-isopropylphenyl(1-hydroxyisopropyl)ketone; or a triazine compound, for example, 4"'-methyl thiophenyl-1-di(trichloromethyl)-3,5-S-triazine, S-triazine-2-(stilbene)-4,6-bistrichloromethyl, or paramethoxystyryltriazine.

Example photoinitiators include benzoin or its derivative such as α-methylbenzoin;U-phenylbenzoin; α-allylbenzoin; α-benzylbenzoin; benzoin ethers suchas benzil dimethyl ketal (available, for example, under the trade designation "IRGACURE651" from Ciba Specialty Chemicals), benzoin methyl ether, benzoin ethyl ether, benzoinn-butyl ether; acetophenone or its derivative, such as 2-hydroxy-2-methyl-1-phenyl-1-propanone (available, for example, under the trade designation "DAROCUR 1173" fromCiba Specialty Chemicals) and 1-hydroxycyclohexyl phenyl ketone (available, forexample, under the trade designation "IRGACURE 184" from Ciba Specialty Chemicals); 2-methyl-1-[4-(methylthio) phenyl]-2-(4-morpholinyl)- -1-propanone (available, forexample, under the trade designation "IRGACURE 907" from Ciba Specialty Chemicals);2-benzyl-2-(dimethlamino)-1[4-(4-morpholinyl) phenyl]-1-butanone (available, forexample, under the trade designation "IRGACURE 369" from Ciba Specialty Chemicals);or a blend thereof.

Another useful photoinitiator includes pivaloin ethyl ether, anisoin ethyl ether;anthraquinones, such as anthraquinone, 2-ethylanthraquinone, 1-chloroanthraquinone, 1,4-dimethylanthraquinone, 1-methoxyanthraquinone, benzanthraquinonehalomethyltriazines, and the like; benzophenone or its derivative; iodonium salt or sulfonium salt as describedhereinabove; a titanium complex such as bis(5-2,4-cyclopentadienyl)bis[2,-6-difluoro-3-(1H-pyrrolyl)phenyl)titanium (commercially available under the trade designation" CG1784DC", also from Ciba Specialty Chemicals); a halomethylnitrobenzene such as 4-bromomethylnitrobenzene and the like; or mono- or bis-acylphosphine (available, forexample, from Ciba Specialty Chemicals under the trade designations "IRGACURE1700", "IRGACURE 1800", "IRGACURE 1850", and "DAROCUR 4265"). A suitablephotoinitiator may include a blend of the above mentioned species, such as α-hydroxyketone/acrylphosphin oxide blend (available, for example, under the trade designationIRGACURE 2022 from Ciba Specialty Chemicals).

A further suitable free radical photoinitiator includes an ionic dye-counter ioncompound, which is capable of absorbing actinic rays and producing free radicals, whichcan initiate the polymerization of the acrylates.

A photoinitiator can be present in an amount not greater than about 20 wt. %, forexample, not greater than about 10 wt. %, and typically not greater than about 5 wt. %, based on the total weight of the coating formulation. For example, a photoinitiator may be present in an amount of 0.1 wt.% to 20.0 wt. %, such as 0.1 wt.% to 5.0 wt. %, or most typically 0.1 wt. %to 2.0 wt. %, based on the total weight of the coating formulation,although amounts outside of these ranges may also be useful. In one example, the photo initiator is present in an amount at least about 0.1 wt. %, such as at least about 1.0wt. %, for example in an amount 1.0 wt.% to 10.0 wt. %.

Optionally, a thermal curative may be included in the coating. Such a thermal curative is generally thermally stable at temperatures at which mixing of the components takes place. Thermal curatives for epoxy resins and acrylates are well known in the art. A thermal curative may be present in a coating precursor in any effective amount. Such amounts are typically in the range of about 0.01 wt.% to about5.0 wt. %, desirably in the range from about 0.025 wt. %to about 2.0 wt. %by weight,based upon the weight of the coating formulation, although amounts outside of these ranges may also be useful.

The coating may also include other components such as solvents,plasticizers, crosslinkers, chain transfer agents, stabilizers, surfactants, curing agents,reaction mediators and agents for influencing the fluidity of the dispersion. For example,the coating can also include one or more chain transfer agents selected from the group consisting of polyol, polyamine, linear or branched polyglycol ether, polyester and polylactone.

In another example, the coating may include additional components, suchas a hydroxy-functional or an amine functional component and additive. Generally, the particular hydroxy-functional component is absent curable groups (such as, for example,acrylate-, epoxy-, or oxetane groups) and is not selected from the group consisting ofphotoinitiators.

The coating may include one or more hydroxy-functional components.Hydroxy-functional components may be helpful in further tailoring mechanical propertiesof the coating formulation upon cure. Anhydroxy-functional component includes monol (a hydroxy-functional component comprising one hydroxy group) or polyol (a hydroxyfunctionalcomponent comprising more than one hydroxy group).

A representative example of a hydroxy-functional component includes analkanol, a monoalkyl ether of polyoxyalkyleneglycol, a monoalkyl ether ofalkyleneglycol,alkylene and arylalkylene glycol, such as 1,2,4-butanetriol, 1,2,6-hexanetriol, 1,2,3-heptanetriol, 2,6-dimethyl-1,2,6-hexanetriol, (2R,3R)-(-)-2-benzyloxy-1,3,4-butanetriol,1,2,3-hexanetriol, 1,2,3-butanetriol, 3-methyl-1,3,5-pentanetriol, 1,2,3-cyclohexanetriol,1,3,5-cyclohexanetriol, 3,7,11,15-tetramethyl-1,2,3-hexadecanetriol, 2-hydroxymethyltetrahydropyran-3,4,5-triol, 2,2,4,4-tetramethyl-1,3-cyclobutanediol, 1,3-cyclopentanediol, trans-1,2-cyclooctanediol, 1,16-hexadecanediol, 3,6-dithia-1,8-octanediol, 2-butyne-1,4-diol, 1,2- or 1,3-propanediol, 1,2- or 1,4-butanediol, 1,5-pentanediol, 1,6-hexanediol, 1,7-heptanediol, 1,8-octanediol, 1,9-nonanediol, 1-phenyl-1,2-ethanediol, 1,2-cyclohexanediol, 1,5-decalindiol, 2,5-dimethyl-3-hexyne-2,5-diol,2,2,4-trimethylpentane-1,3-diol, neopentylglycol, 2-ethyl-1,3-hexanediol, 2,7-dimethyl-3,5-octadiyne-2-7-diol, 2,3-butanediol, 1,4-cyclohexanedimethanol, polyoxyethylene orpolyoxypropylene glycols or triols of molecular weights from about 200 to about 10,000,polytetramethylene glycols of varying molecular weight, poly(oxyethylene-oxybutylene)random or block copolymers, copolymers containing pendant hydroxy groups formed by hydrolysis or partial hydrolysis of vinyl acetate copolymers, polyvinylacetal resinscontaining pendant hydroxyl groups, hydroxy-functional (e.g., hydroxy-terminated)polyesters or hydroxy-functional (e.g., hydroxy-terminated) polylactones, aliphaticpolycarbonate polyols (e.g., an aliphatic polycarbonate diol), hydroxy-functional (e.g.,hydroxy-terminated) polyethers (e.g., polytetrahydrofuranpolyols having a numberaverage molecular weight in the range of 150-4000 g/mol, 150-1500 g/mol, or 150-750g/mol), or a combination thereof. Polyolscan further include aliphatic polyol, suchas glycerol, trimethylolpropane, and also sugar alcohol, such as erythritol, xylitol,mannitol or sorbitol. In particular embodiments, the coating of the coatingformulation includes one or more alicyclic polyols, such as 1,4-cyclohexane-dimethanol,sucrose, or 4,8-bis(hydroxymethyl)tricyclo(5,2,1,0)decane.

A suitable polyether for the coating includes, in particular, linear orbranched polyglycol ether obtainable by ring-opening polymerization of cyclic ether in the presence ofpolyol, e.g., the aforementioned polyol; polyglycol ether, polyethylene glycol,polypropylene glycol or polytetramethylene glycol or a copolymer thereof.

Another suitable polyester for the coating of the formulation includes a polyester based on polyols and aliphatic, cycloaliphatic or aromatic polyfunctionalcarboxylic acids (for example, dicarboxylic acids), or specifically all correspondingsaturated polyesters which are liquid at temperatures of 18°C to 300°C, typically 18°C to150°C: typically succinic ester, glutaric ester, adipic ester, citric ester, phthalic ester,isophthalic ester, terephthalic ester or an ester of corresponding hydrogenation products,with the alcohol component being composed of monomeric or polymeric polyols, forexample, of those of the above-mentioned kind.

Further polyester includes aliphatic polylactone, such as α-polycaprolactone, orpolycarbonate, which, for example, are obtainable by polycondensation of diol with phosgene. For the coating it is typical to use polycarbonate ofbisphenol A havingan average molecular weight of from 500 to 100,000.

For the purpose of influencing the viscosity of the coating and, inparticular, viscosity reduction or liquefaction, the polyol, polyether or saturated polyesteror mixtures thereof may, where appropriate, be admixed with a further suitable auxiliary,particularly a solvent, a plasticizer, a diluent or the like. In an embodiment, the compositions may comprise, relative to the total weight of the coating formulation, notgreater than about 15 wt. %, such as not greater than about 10 wt. %, not greater thanabout 6 wt. %, not greater than about 4 wt. %, not greater than about 2 wt. %, or about 0wt. % of a hydroxy-functional component. In one example, the coating formulations are free of substantial amounts of a hydroxy-functional component. The absence ofsubstantial amounts ofhydroxy-functional components may decrease the hygroscopicityof the coating formulations or articles obtained therewith.

An example of a hydroxyl or an amine functional organic compound for makingcondensation product with an alkylene oxide includes a polyol having 3 to 20 carbonatoms, a (C8-C18) fatty acid (C1-C8) alkanol amides like fatty acid ethanol amides, a fattyalcohol, an alkylphenol or a diamine having 2 to 5 carbon atoms. Such compounds are reacted with alkylene oxide, such as ethylene oxide, propylene oxide or mixtures thereof. The reaction may take place in a molar ratio of hydroxy or amine containing organiccompound to alkyleneoxide of, for example, 1:2 to 1:65. The condensation producttypically has a weight average molecular weight of about 500 to about 10,000, and may bebranched, cyclic, linear, and either a homopolymer, a copolymer or a terpolymer.

In an example the coatingincludes an ionic surfactant and a non-ionic surfactant. In general, surfactants are configured for interacting with and modifying the surface of the particulate filler. The non-ionic surfactant can include one or more reactive groups that can be chemically bonded to a polymer matrix by a curing process, and wherein the polymer matrix is formed of cationically and radically polymerizable compounds. The one or more reactive groups can include vinyl, hydroxyl, carboxyl, acrylic, epoxy, urethane, amine, and wherein the curing process includes, UV, thermal, moisture, or chemical crosslinking. For example, a non-ionic surfactant may include organosiloxane, functionalized organisiloxane, alkyl-substituted pyrrolidone, polyoxyalkylene ether, ethyleneoxidepropyleneoxide copolymer or a combination thereof. For various particulate fillers and, in particular, for silica filler, a suitable surface modifier includes siloxane.

In general, the functionalized siloxane is a compound having a molecular weight ranging from about 300 to about 20,000. Such compounds are commercially available from, for example, the General Electric Company or from Goldschmidt, Inc. A typical functionalized siloxane is an amine functionalized siloxane wherein the functionalization is typically terminal to the siloxane.

Organosiloxanes are sold under the name Silwet by Witco Corporation. Such organosiloxanes typically have an average weight molecular weight of about 350 to about 15,000, are hydrogen or C1-C4 alkyl capped and may be hydrolyzable or non-hydrolyzable. Typical organosiloxanes include those sold under the name of Silwet L-77, L-7602, L-7604 and L-7605, which are polyalkylene oxide modified dialkylpolysiloxanes.

An example of a suitable ionic surfactant includes (C8-C16)alkylbenzenesulfonate, (C8-C16)alkane sulfonate, (C8-C18) α-olefin sulfonate, α-sulfo (C8-C16) fatty acid methyl ester, (C8-C16) fatty alcohol sulfate, mono- or di-alkyl sulfosuccinate with each alkyl independently being a (C8-C16)alkyl group, alkyl ether sulfate, a (C8-C16) salt of carboxylic acid or isethionate having a fatty chain of about 8 to about 18 carbons, for example, sodium diethylhexyl sulfosuccinate, sodium methyl benzene sulfonate, or sodium bis(2-ethylhexyl)sulfosuccinate (for example, Aerosol OT or AOT).

In a preferred example, the ionic surfactant is dioctyl sulfosuccinate sodium salt (DSS), which has the following chemical structure:

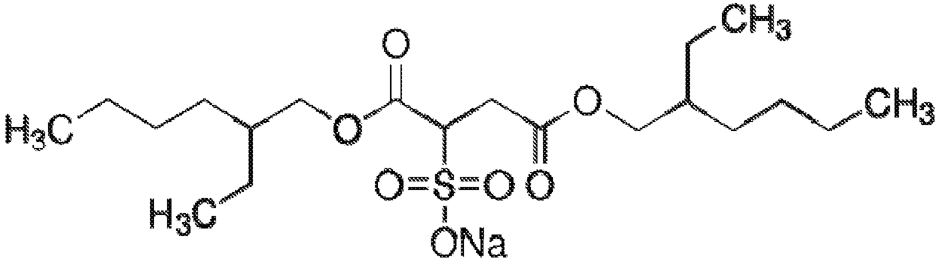

The ionic surfactant can be at least marginally soluble in isopropanol (IPA). For example, the ionic surfactant can dissolve such that the coating composition is transparent. In an example, about 0.2 grams, about 0.3 grams, about 0.5 grams, about 0.6 grams, about 0.7 grams, 0.8 grams of DSS can dissolve in about 1.0 gram of IPA. The ionic surfactant can be dissolvable in a solution including at least one of IPA, methanol, and water.

The non-ionic surfactantcan be a compound selected from an organosiloxane, a functionalisedorganosiloxane, an alkyl-substituted pyrrolidone, a polyoxyalkylene ether, or a ethyleneoxidepropylenenoxide block copolymer.

An example of a commercial surfactant includes a cyclic organo-silicone (e.g., SF1204, SF1256, SF1328, SF1202 (decamethyl-cyclopentasiloxane(pentamer)), SF1258, SF1528, Dow Corning 245 fluids, Dow Corning 246 fluids, dodecamethyl-cyclo-hexasiloxane (heximer), and SF 1173); a copolymer of a polydimethylsiloxane and a polyoxyalkylene oxide (e.g., SF1488 and SF1288); linear silicon comprising oligomers (e.g., Dow Corning 200 (R) fluids); Silwet L-7200, Silwet L-7600, Silwet L-7602, Silwet L-7605, Silwet L-7608, or Silwet L-7622; a nonionic surfactants (e.g., Triton X-100, Igepal CO-630, PVP series, Airvol 125, Airvol 305, Airvol 502 and Airvol 205); an organic polyether (e.g., Surfynol 420, Surfynol 440 and Surfynol 465); or Solsperse 41000.

Another commercial non-ionic surfactant includes SF1173 (from GE Silicones); an organic polyether like Surfynol 420, Surfynol 440, and Surfynol 465 (from Air Products Inc); Silwet L-7200, Silwet L-7600, Silwet L-7602, Silwet L-7605, Silwet L-7608, or Silwet L-7622 (from Witco) or non-ionic surfactant such as Triton X-100 (from Dow Chemicals), Igepal CO-630 (from Rhodia), PVP series (from ISP Technologies) and Solsperse41000 (from Avecia).

The amount of ionic surfactant ranges from 0 wt. % to 10 wt. %. More typically, the amount of surfactant is between 0.1 wt. % and 5 wt. %. The silanes are typically used in concentrations from 40 mol. % to 200 mol. % and, particularly, 60 mol. % to 150 mol. % relative to the molecular quantity surface active sites on the surface of the nano-sized particulate filler. Generally, the coating formulation includes not greater than about 20 wt. % surfactant, including the ionic surfactant and the non-ionic surfactant, such as about 0.1 wt. % to about 10.0 wt. % surfactant, based on the total weight of the coating formulation. In an example, the coating formulation can have an ionic surfactant to non-ionic surfactant weight ratio (e.g., ionic : non-ionic) of about 1:50 to about 1:1, preferably about 1:30 to about 1:1, including 1:5, 1:4, 1:3, 1:2, 1:1.

In a particular embodiment, the coating formulation includes about 10 wt.% toabout 90 wt. % cationically polymerizable compound, not greater than about 40 wt. %radically polymerizable compound, and about 5 wt. % to about 80 wt. % particulate filler,based on the total weight of the coating formulation. It is understood that the sum of the amounts of the coating formulation components adds to 100 wt. % and, as such, whenamounts of one or more components are specified, the amounts of other componentscorrespond so that the sum of the amounts is not greater than 100 wt. %. In an embodiment, a weight ratio of the cationically polymerizable compound to the radicallypolymerizable compound is from about 1:1 to about 2:1.

The cationically polymerizable compound, for example, includes an epoxy-functionalcomponent or an oxetane-functional component. For example, the coatingformulation may include about 10 wt. % to about 60 wt. % cationically polymerizablecompound, such as about 20 wt. % to about 50 wt. % cationically polymerizablecompound based on the weight of the coating formulation. The example coatingformulation may include not greater than about 20 wt. %, such as about 5 wt. % to about20 wt. % mono or poly glycidyl ethers of an aliphatic alcohol, aliphatic polyols,polyesterpolyol or polyetherpolyol. The examplecoating formulation may include notgreater than about 50 wt. %, such as about 5 wt. % to about 50 wt. % of a componenthaving a poly ether backbone, such as polytetramethylenediol, glycidylethers ofpolytetramethylenediol, and acrylates of polytetramethylenediol or polytetramethylenediol containing one or more polycarbonate groups.

The radically polymerizable compound of the above example, for example,includes components having one or more methacylate groups, such as components havingat least 3 methacrylate groups. In another example, the coating formulation includes notgreater than about 30 wt. %, such as not greater than about 20 wt. %, not greater thanabout10 wt. % or not greater than about 5 wt. % radically polymerizable compound.

The formulation may further include not greater than about 20 wt.% cationicphotoinitiator, such as about0.1 wt. %to about 20 wt. %, or not greater than about 20 wt.%radical photoinitiator, such as about 0.1 wt.% to about 20 wt. %. For example, the coating formulation may include not greater than about10 wt. %, such as not greater thanabout 5 wt. % cationic photoinitiator. In another example, the coating formulation mayinclude not greater than about10 wt. %, such as not greater than about 5 wt.% free radicalphotoinitiator.

The particular filler includes dispersed submicron particulates. Generally, the coating formulation includes 5 wt. % to 80 wt. %, such as 5 wt. % to 60 wt. %, such as 5 wt. % to 50 wt. %, for example, 20 wt. % to 45 wt. % submicron particulate filler. Particular embodiments include at least about 5 wt. % particulate filler, for example at least about 10 wt. %, such as at least about 20 wt. %. In a particular embodiment, the particulate filler is solution formed silica particulate and may be colloidally dispersed in a polymer component. The examplecoating formulation may further include not greaterthan about 5 wt. % surfactant, such as0.1 wt. % to 5 wt. % surfactant, selected fromorganosiloxane, functionalisedorganosiloxane, alkyl-substituted pyrrolidone,polyoxyalkylene ether, and ethyleneoxidepropylenenoxide block copolymer.

In a particular embodiment, the coating formulation is formed by mixing ananocomposite epoxy or acrylate precursor, i.e., a precursor including submicronparticulate filler. For example, the coating formulation may include not greater than about90 wt. % nanocomposite epoxy and may include acrylic precursor, such as not greater than50 wt. % acrylic precursors. In another example, a nanocomposite acrylic precursor maybe mixed with epoxy.

The coating formulation including ancoating comprising polymeric ormonomeric constituents and including dispersed particulate filler may be used to form acoating that is applied to a surface of the ophthalmic lens, it is exposed to radiationpreferably in the ultraviolet range. Such radiation exposure causes the radically polymerizable polymer to rapidly cure creating a structure or lattice that retains the cationically polymerized polymer in place while it undergoes a slower photo curingprocess. As a result the cationically polymerized polymer cures in localized, encapsulatedenvironments as it is retained by the quickly cured radically polymerizable polymer.

The coating system described herein is stable at room temperature and includes a reduced solvent concentration thereby reducing the overall VOC impact of the material. The coating system is formed as an epoxy/acrylate cationic hybrid coating thatincludes two polymerization initiators, one of which commences polymerization uponexposure to ultraviolet radiation, while the other is a photo initiated catalyst. The coatingmay be further enhanced by the addition of colloidal nano-silica particles, such as Nanocryl C150 (e.g. reactive diluent/SiO₂), that serve to reinforce the mechanical properties of the coating system without compromising the overall transparency and optical clarity of the coating.

Further by employing a coating system such as described herein theepoxy/acrylate coating system is compatible with most dyes in a manner that allows the incorporation of infrared and near infrared energy filtering as well as the incorporation ofother coating additives that serve to enhance the cleaning, anti-fogging and anti-reflectiveproperties of the ophthalmic lens.

It is further preferred that the particular polymer substrate for the ophthalmic lensselected be well suited to the application in which the finished optical filter will beemployed. For example, lens blanks are typically formed using a polycarbonate whilewindows are formed using acrylic. In practical application, the filter blank is formed for further use as lens blanks, lenses for eyewear, windows and filtering plates.

It can therefore be seen that the coatings described herein provide a lens coating systemthat can be rapidly cured, offers the advantages of acrylate coatings yet has improvedmechanical properties such as abrasion resistance. Further,the coating system described herein can be configured for application to a polymer ophthalmic lens that has improved abrasionresistance of the level of an epoxy coating, rapid curing of a radiation cured coating, whilealso being stable a room temperature, exhibiting low solvent/VOC content and supportingadditives for features such as anti-fog, easy cleaning, anti-reflection and targetedwavelength filtering. For these reasons, the instant application is believed to represent asignificant advancement in the art, which has substantial commercial merit.

A method for forming an anti-fog coated surface is described herein. The method can include preparing an anti-fog coating, such as described herein, including, but not limited to, a cationically polymerizable compound including at least one epoxy group, a radically polymerizable compound including at least one acrylate group, a non-ionic surfactant, and an ionic surfactant. In an example, preparing can include combining a cationic polymerization initiator and a free radical polymerization initiator with the cationically polymerizable compound.

The method of forming the anti-fog coated surface can include applying the anti-fog coating to a surface, such as dip-coating, spin-coating, spray-coating, and a doctor blade process. In an example, the method can include multiple applications of the anti-fog coating, such as prior to, during, or after a curing process.

In an example, the method includes curing the anti-fog coating on the surface to form an anti-fog coated surface. The surface can include the substrate as described herein, including, but not limited to, an ophthalmic lens of eyeglasses, a television screen, or a face shield. Curing the anti-fog coating includes polymerization. For example, curing can include exposing the cationic polymerization initiator to ultraviolet radiation, thermal energy, or actinic to cause polymerization of the cationically polymerizable compound and exposing the free radical polymerization initiator to the ultraviolet radiation, the thermal energy, or the actinic radiation to cause polymerization of the radically polymerizable compound. In an example, curing can include using ultraviolet radiation, thermal energy, or actinic radiation.

In an example, the curing process can cause the anti-fog coated surface to be partially non-transparent (e.g., not clear). The present method includes, in an example, washing the anti-fog coated surface. Washing can include contacting the anti-fog coated surface with water, such as by soaking (e.g., immersing) the anti-fog coated surface from about 1 second to about 1 minute, or misting with water. The anti-fog coated surface can be immersed in water more than once. During the washing process at least a portion of the ionic surfactant is removed from the anti-fog coated surface. For example, a portion of the ionic surfactant that did not dissolve in the IPA can be removed from the anti-fog coated surface. The washing process can, in an example, improve the clarity or transparency of the anti-fog coated surface. The water used for washing the anti-fog coated surface can be from about room temperature (e.g., about 20 °C to about 80 °C). In an example, the method can include drying the anti-fog coated surface, such as by air drying.

### Prophetic Examples:

### Comparative Anti-Fog performance examples (Prophetic)

A UV curable epoxy/acrylate hybrid coating composition as illustrated in example 1.1, 1.2, 1.3, and 1.4 respectively. Each coating is coated on the 76 mm polycarbonate lens blanks and followed by UV cure with combined Fusion D and H lamps at 50 ft/minute to give a dry thickness of 2 microns. Anti-fog coating from each composition is tested by the EN 166/168 Resistance to Fogging Internal Screening Test, and if a clear water film forms on the coating surface instead of fogging, it is considered as a good anti-fog coating. The composition without DSS will be used as reference to compare the effect of DSS. The detailed compositions, in grams, and anti-fog performance are summarized in the table below.

| **Component** | **Example 1.1** | **Example 1.2** | **Example 1.3** | **Example1.4** | **Example 1.5** |
|---|---|---|---|---|---|
| ACHWL 4221 (difunctional cycloaliphatic epoxy) | 14.67 | 14.67 | 14.67 | 14.67 | 14.67 |
| poly(ethylene glycol) diglycidyl ether (MN 500) | 0.00 | 0.00 | 0.00 | 0.00 | 0.00 |
| OXT-101 | 4.50 | 4.50 | 4.50 | 4.50 | 4.50 |
| Chivacure 1176 (Chitec) | 0.63 | 0.63 | 0.63 | 0.63 | 0.63 |
| PEGMA (Mn 500) | | | | | |
| PEGMA-ME (Mn 480) | | | | | |
| PEGDA (Mn 575) | 30.40 | 30.40 | 30.40 | 30.40 | 30.40 |
| Nanocryl c150 *reactive diluent/SiO₂) | 8.00 | 8.00 | 8.00 | 8.00 | 8.00 |
| Chivacure 184 (free-radical initiator) | 0.45 | 0.45 | 0.45 | 0.45 | 0.45 |
| IPA | 35.24 | 35.24 | 35.24 | 35.24 | 35.24 |
| Poly(ethylene glycol) dioleate PEGDO (Mn 1120) | 0.00 | 0.00 | 3.00 | 3.00 | 3.00 |
| DSS | 0.00 | 3.00 | 3.00 | 1.00 | 2.00 |
| Total (grams) | 96.89 | 96.89 | 99.89 | 97.89 | 98.89 |
| | | | | | |
| anti-fog performance-warm mist | Fog | Fog | Fog | Fog | Fog |
| anti-fog performance - EN 166 - 30 minutes | Fog - Nonuniform Film | Fog - Nonuniform Film | No Fog | | |
| anti-fog performance - EN 166 - 60 minutes | Fog - Nonuniform Film | Fog - Nonuniform Film | No Fog | No Fog | No Fog |
| anti-fog performance - EN 166 - 120 minutes | Fog - Nonuniform Film | Fog - Nonuniform Film | No Fog | No Fog | No Fog |

Accordingly, coating compositions for anti-fog coatings, methods for coating a surface to provide an anti-fog coated surface, and coated transparent polymeric materials have been described. In an embodiment, an improved coating system for transparent polymeric materials, such as ophthalmic lenses, provides improved characteristics in the form of anti-fog performance and scratch or abrasion resistance, and mitigation of surfactant diffusion, while also providing improved manufacturability and rapid curing as compared to prior art coating systems. Generally, the coating system is a composite coating that hybridizes both epoxy and acrylate coating materials into a single coating system with an ionic and a non-ionic surfactant. In this manner, the coating system exhibits the mechanical properties imparted by epoxies creating a highly abrasion resistant coating while also including the advantageous properties of radiation cured coatings imparted by acrylates in the form of rapid processing and curing as well as a superior vehicle for carrying additives. The ionic surfactant includes DSS. The anti-fog coating is applied to a surface, such as of a transparent polymeric material, and is polymerized to form an anti-fog coated surface. When moisture condenses onto the surface of the coated transparent polymeric material, the composite coating exhibits photo-induced hydrophilic and self-cleaning properties to impart long-lasting anti-fog performance to the transparent polymeric material.

While at least one embodiment has been presented in the foregoingdetailed description, it should be appreciated that a vast number ofvariations exist. It should also be appreciated that the embodiment orembodiments are only examples, and are not intended to limit the scope,applicability, or configuration in any way. Rather, the foregoing detaileddescription will provide those skilled in the art with a convenient road map for implementing an embodiment described herein. It being understood thatvarious changes may be made in the function and arrangement of elements described in anembodiment without departing from the scope of the detailed description as set forth in the appended claims.

### Examples

Examples herein provide anti-fog coatings having increased abrasion resistance and mitigate surfactant diffusion.

Example 1 includes subject matter directed toward an anti-fog coating, comprising:a cationically polymerizable compound including at least one epoxy group; a radically polymerizable compound including at least one acrylate group; a non-ionic surfactant; and an ionic surfactant.

In Example 2, the subject matter of Example 1 can be optionally configured such that wherein the non-ionic surfactant comprises one or more reactive groups that can be chemically bonded to a polymer matrix by a curing process, and wherein the polymer matrix is formed of cationically and radically polymerizable compounds.

In Example 3, the subject matter of Examples 1 or 2 can be optionally configuredsuch thatwherein the one or more reactive groups comprises vinyl, hydroxyl, carboxyl, acrylic, epoxy, urethane, amine, and wherein the curing process includes, UV, thermal, moisture, or chemical crosslinking.

In Example 4, the subject matter of Examples 1-3 can be optionally configuredsuch thatwherein the anti-fog coating is configured to be washed such that at least a portion of the ionic surfactant is removed from the anti-fog coating.

In Example 5, the subject matter of Examples 1-4 can be optionally configuredsuch thatwherein the ionic surfactant is dioctyl sulfosuccinate sodium

In Example 6, the subject matter of Examples 1-5 can be optionally configuredsuch thatwherein the non-ionic surfactant is about 0.1 wt% to about 10 wt% of the anti-fog coating.

In Example 7, the subject matter of Examples 1-6 can be optionally configuredsuch thatwherein the ionic surfactant is about 0.1 wt% to about 10 wt% of the anti-fog coating.

In Example 8, the subject matter of Examples 1-7 can be optionally configuredto further comprise a cationic polymerization initiator that causes polymerization of the cationically polymerizable compound upon exposure to ultraviolet radiation, thermal energy, or actinic radiation.

Example 9, the subject matter of Examples 1-8 can be optionally configured to further comprise a free radical polymerization initiator that causes polymerization of the radically polymerizable compound upon exposure to ultraviolet radiation, thermal energy, or actinic radiation.

In Example 10 includes subject matter including a method for forming an anti-fog coated surface, comprising: preparing an anti-fog coating, the anti-fog coating comprising: a cationically polymerizable compound including at least one epoxy group; a radically polymerizable compound including at least one acrylate group; a non-ionic surfactant; and an ionic surfactant; applying the anti-fog coating to a surface; curing the anti-fog coating to form an anti-fog coated surface; contacting the anti-fog coated surface with water; and drying the anti-fog coated surface.

In Example 11, the subject matter of Examples 1-10 can be optionally configuredsuch that wherein the preparing includes combining a cationic polymerization initiator and a free radical polymerization initiator with the cationically polymerizable compound, the radically polymerizable compound, wherein the curing includes: exposing the cationic polymerization initiator to ultraviolet radiation, thermal energy, or actinic to cause polymerization of the cationically polymerizable compound; and exposing the free radical polymerization initiator to the ultraviolet radiation, the thermal energy, or the actinic radiation to cause polymerization of the radically polymerizable compound.

In Example 12, the subject matter of Examples 1-11 can be optionally configuredsuch thatwherein the contacting includes soaking the anti-fog coated surface in water from about 1 second to about 1 minute.

In Example 13,the subject matter of Examples 1-12 can be optionally configuredsuch thatwherein the contacting includes misting the anti-fog surface with water.

In Example 14, the subject matter of Examples 1-13 can be optionally configuredsuch thatwherein the drying includes air drying the anti-fog coated surface.

In Example 15, the subject matter of Examples 1-14 can be optionally configuredsuch thatwherein the preparing includes providing an ionic surfactant to non-ionic surfactant weight ratio of about 1:1 to about 1:30.

## Claims

1. An anti-fog coating, comprising:
a cationically polymerizable compound including at least one epoxy group;
a radically polymerizable compound including at least one acrylate group;
a non-ionic surfactant; and
an ionic surfactant.

2. The anti-fog coating of claim 1, wherein the non-ionic surfactant comprises one or more reactive groups that can be chemically bonded to a polymer matrix by a curing process, and wherein the polymer matrix is formed of cationically and radically polymerizable compounds.

3. The anti-fog coating of claim 2, wherein the one or more reactive groups comprises vinyl, hydroxyl, carboxyl, acrylic, epoxy, urethane, amine, and wherein the curing process includes, UV, thermal, moisture, or chemical crosslinking.

4. The anti-fog coating of claim 1, wherein the anti-fog coating is configured to be washed such that at least a portion of the ionic surfactant is removed from the anti-fog coating.

5. The anti-fog coating of claim 1, wherein the ionic surfactant is dioctyl sulfosuccinate sodium.

6. The anti-fog coating of claim 1, wherein the non-ionic surfactant is 0.1 wt% to 10 wt% of the anti-fog coating.

7. The anti-fog coating of claim 1, wherein the ionic surfactant is 0.1 wt% to 10 wt% of the anti-fog coating.

8. The anti-fog coating of claim 1, further comprising a cationic polymerization initiator that causes polymerization of the cationically polymerizable compound upon exposure to ultraviolet radiation, thermal energy, or actinic radiation.

9. The anti-fog coating of claim 1, further comprising a free radical polymerization initiator that causes polymerization of the radically polymerizable compound upon exposure to ultraviolet radiation, thermal energy, or actinic radiation.

10. A method for forming an anti-fog coated surface, comprising:
preparing an anti-fog coating, the anti-fog coating comprising:
a cationically polymerizable compound including at least one epoxy group;
a radically polymerizable compound including at least one acrylate group;
a non-ionic surfactant; and
an ionic surfactant;
applying the anti-fog coating to a surface;
curing the anti-fog coating to form an anti-fog coated surface;
contacting the anti-fog coated surface with water; and
drying the anti-fog coated surface.

11. The method of claim 10, wherein the preparing includes combining a cationic polymerization initiator and a free radical polymerization initiator with the cationically polymerizable compound, the radically polymerizable compound, wherein the curing includes:
exposing the cationic polymerization initiator to ultraviolet radiation, thermal energy, or actinic to cause polymerization of the cationically polymerizable compound; and
exposing the free radical polymerization initiator to the ultraviolet radiation, the thermal energy, or the actinic radiation to cause polymerization of the radically polymerizable compound.

12. The method of claim 10, wherein the contacting includes soaking the anti-fog coated surface in water from 1 second to 1 minute.

13. The method of claim 10, wherein the contacting includes misting the anti-fog surface with water.

14. The method of claim 10, wherein the drying includes air drying the anti-fog coated surface.

15. The method of claim 10, wherein the preparing includes providing an ionic surfactant to non-ionic surfactant weight ratio of 1:1 to 1:30.

## Patentansprüche

1. Antibeschlagbeschichtung, umfassend:
eine kationisch polymerisierbare Verbindung, die wenigstens eine Epoxygruppe umfasst;
eine radikalisch polymerisierbare Verbindung, die wenigstens eine Acrylatgruppe umfasst;
ein nichtionisches grenzflächenaktives Mittel; und
ein ionisches grenzflächenaktives Mittel.

2. Antibeschlagbeschichtung gemäß Anspruch 1, wobei das nichtionische grenzflächenaktive Mittel eine oder mehrere reaktionsfähige Gruppen umfasst, die durch einen Härtungsvorgang chemisch an eine Polymermatrix gebunden werden können, und wobei die Polymermatrix aus kationisch und radikalisch polymerisierbaren Verbindungen gebildet ist.

3. Antibeschlagbeschichtung gemäß Anspruch 2, wobei die eine oder mehreren reaktionsfähigen Gruppen Vinyl, Hydroxy, Carboxy, Acryl, Epoxy, Urethan, Amin umfassen und wobei das Härtungsverfahren UV-, thermische, Feuchte- oder chemische Vernetzung umfasst.

4. Antibeschlagbeschichtung gemäß Anspruch 1, wobei die Antibeschlagbeschichtung dafür gestaltet ist, gewaschen zu werden, so dass wenigstens ein Teil des ionischen grenzflächenaktiven Mittels aus der Antibeschlagbeschichtung entfernt wird.

5. Antibeschlagbeschichtung gemäß Anspruch 1, wobei das ionische grenzflächenaktive Mittel Dioctylsulfosuccinat-Natrium ist.

6. Antibeschlagbeschichtung gemäß Anspruch 1, wobei das nichtionische grenzflächenaktive Mittel 0,1 Gew.-% bis 10 Gew.-% der Antibeschlagbeschichtung bildet.

7. Antibeschlagbeschichtung gemäß Anspruch 1, wobei das ionische grenzflächenaktive Mittel 0,1 Gew.-% bis 10 Gew.-% der Antibeschlagbeschichtung bildet.

8. Antibeschlagbeschichtung gemäß Anspruch 1, ferner umfassend einen kationischen Polymerisationsinitiator, der bei Exposition gegenüber Ultraviolettstrahlung, Wärmeenergie oder aktinischer Strahlung Polymerisation der kationisch polymerisierbaren Verbindung bewirkt.

9. Antibeschlagbeschichtung gemäß Anspruch 1, ferner umfassend einen Radikal-Polymerisationsinitiator, der bei Exposition gegenüber Ultraviolettstrahlung, Wärmeenergie oder aktinischer Strahlung Polymerisation der radikalisch polymerisierbaren Verbindung bewirkt.

10. Verfahren zur Herstellung einer antibeschlagbeschichteten Oberfläche, umfassend:
Herstellen einer Antibeschlagbeschichtung, wobei die Antibeschlagbeschichtung umfasst:
eine kationisch polymerisierbare Verbindung, die wenigstens eine Epoxygruppe umfasst;
eine radikalisch polymerisierbare Verbindung, die wenigstens eine Acrylatgruppe umfasst;
ein nichtionisches grenzflächenaktives Mittel; und
ein ionisches grenzflächenaktives Mittel;
Aufbringen der Antibeschlagbeschichtung auf eine Oberfläche;
Härten der Antibeschlagbeschichtung, um eine antibeschlagbeschichtete Oberfläche zu bilden;
Inkontaktbringen der antibeschlagbeschichteten Oberfläche mit Wasser; und
Trocknen der antibeschlagbeschichteten Oberfläche.

11. Verfahren gemäß Anspruch 10, wobei die Herstellung Kombinieren eines kationischen Polymerisationsinitiators und eines Radikal-Polymerisationsinitiators mit der kationisch polymerisierbaren Verbindung, der radikalisch polymerisierbaren Verbindung umfasst, wobei das Härten umfasst:
Exponieren des kationischen Polymerisationsinitiators gegenüber Ultraviolettstrahlung, Wärmeenergie oder aktinischer Strahlung, um Polymerisation der kationisch polymerisierbaren Verbindung zu bewirken; und
Exponieren des Radikal-Polymerisationsinitiators gegenüber der Ultraviolettstrahlung, der Wärmeenergie oder der aktinischen Strahlung, um Polymerisation der radikalisch polymerisierbaren Verbindung zu bewirken.

12. Verfahren gemäß Anspruch 10, wobei das Inkontaktbringen Tränken der antibeschlagbeschichteten Oberfläche in Wasser für 1 Sekunde bis 1 Minute umfasst.

13. Verfahren gemäß Anspruch 10, wobei das Inkontaktbringen Benebeln der Antibeschlagoberfläche mit Wasser umfasst.

14. Verfahren gemäß Anspruch 10, wobei das Trocknen Lufttrocknen der antibeschlagbeschichteten Oberfläche umfasst.

15. Verfahren gemäß Anspruch 10, wobei die Herstellung Bereitstellen eines Gewichtsverhältnisses von ionischem grenzflächenaktivem Mittel zu nichtionischem grenzflächenaktivem Mittel von 1:1 bis 1:30 umfasst.

## Revendications

1. Revêtement antibuée, comprenant :
un composé polymérisable par polymérisation cationique comprenant au moins un groupe époxy ;
un composé polymérisable par polymérisation radicalaire comprenant au moins un groupe acrylate ;
un tensioactif non ionique ; et
un tensioactif ionique.

2. Revêtement antibuée selon la revendication 1, dans lequel le tensioactif non ionique comprend un ou plusieurs groupes réactifs qui peuvent être liés chimiquement à une matrice polymère par un procédé de durcissement, et dans lequel la matrice polymère est formée de composés polymérisables par polymérisation cationique et par polymérisation radicalaire.

3. Revêtement antibuée selon la revendication 2, dans lequel lesdits un ou plusieurs groupes réactifs comprennent des groupes vinyle, hydroxyle, carboxyle, acryliques, époxy, uréthane, amine, et dans lequel le procédé de durcissement comprend une réticulation par UV, thermique, par l'humidité, ou chimique.

4. Revêtement antibuée selon la revendication 1, le revêtement antibuée étant configuré pour être lavé de telle sorte qu'au moins une partie du tensioactif ionique soit éliminée du revêtement antibuée.

5. Revêtement antibuée selon la revendication 1, dans lequel le tensioactif ionique est le sulfosuccinate de dioctyle et de sodium.

6. Revêtement antibuée selon la revendication 1, dans lequel le tensioactif non ionique représente de 0,1 % en poids à 10 % en poids du revêtement antibuée.

7. Revêtement antibuée selon la revendication 1, dans lequel le tensioactif ionique représente de 0,1 % en poids à 10 % en poids du revêtement antibuée.

8. Revêtement antibuée selon la revendication 1, comprenant en outre un initiateur de polymérisation cationique qui provoque la polymérisation du composé polymérisable par polymérisation cationique lors d'une exposition à un rayonnement ultraviolet, à de l'énergie thermique, ou à un rayonnement actinique.

9. Revêtement antibuée selon la revendication 1, comprenant en outre un initiateur de polymérisation radicalaire qui provoque la polymérisation du composé polymérisable par polymérisation radicalaire lors d'une exposition à un rayonnement ultraviolet, à de l'énergie thermique, ou à un rayonnement actinique.

10. Procédé de formation d'une surface portant un revêtement antibuée, comprenant :
la préparation d'un revêtement antibuée, le revêtement antibuée comprenant :
un composé polymérisable par polymérisation cationique comprenant au moins un groupe époxy ;
un composé polymérisable par polymérisation radicalaire comprenant au moins un groupe acrylate ;
un tensioactif non ionique ; et
un tensioactif ionique ;
l'application du revêtement antibuée sur une surface ;
le durcissement du revêtement antibuée pour former une surface portant un revêtement antibuée ;
la mise en contact de la surface portant un revêtement antibuée avec de l'eau ; et
le séchage de la surface portant un revêtement antibuée.

11. Procédé selon la revendication 10, dans lequel la préparation comprend la combinaison d'un initiateur de polymérisation cationique et d'un initiateur de polymérisation radicalaire avec le composé polymérisable par polymérisation cationique, et le composé polymérisable par polymérisation radicalaire, le durcissement comprenant :
l'exposition de l'initiateur de polymérisation cationique à un rayonnement ultraviolet, à de l'énergie thermique, ou à un rayonnement actinique, pour provoquer la polymérisation du composé polymérisable par polymérisation cationique ; et
l'exposition de l'initiateur de polymérisation radicalaire au rayonnement ultraviolet, à l'énergie thermique, ou au rayonnement actinique, pour provoquer la polymérisation du composé polymérisable par polymérisation radicalaire.

12. Procédé selon la revendication 10, dans lequel la mise en contact comprend le trempage de la surface portant un revêtement antibuée dans de l'eau pendant 1 seconde à 1 minute.

13. Procédé selon la revendication 10, dans lequel la mise en contact comprend la pulvérisation d'un brouillard d'eau sur la surface antibuée.

14. Procédé selon la revendication 10, dans lequel le séchage comprend le séchage à l'air de la surface portant un revêtement antibuée.

15. Procédé selon la revendication 10, dans lequel la préparation comprend la fourniture d'un rapport pondéral du tensioactif ionique contre le tensioactif non ionique de 1:1 à 1:30.
